# EUROPÄISCHE PATENTANMELDUNG

(11) **EP 3 006 379 A2**
(43) Veröffentlichungstag der Anmeldung: **13.04.2016**
(21) Anmeldenummer: 15002697.9
(22) Anmeldetag: 17.09.2015
(51) Int. Cl.: B65G 19/02, B65G 47/08, B65G 47/14, B65G 1/137

(54) **FÖRDERRINNE FÜR EINEN KOMMISSIONIERAUTOMATEN FÜR APOTHEKEN SOWIE FÖRDERVORRICHTUNG, DREHTELLER UND KOMMISSIONIERAUTOMATEN FÜR APOTHEKEN UND VERFAHREN ZUM BETREIBEN EINER FÖRDERINNE**

(30) Priorität: 17.09.2014 DE 102014013450
(71) Anmelder: Apostore GmbH, 45881 Gelsenkirchen (DE)
(72) Erfinder:
(74) Vertreter: Tilmann, Max Wilhelm

(57) **Zusammenfassung**

Die Erfindung betrifft eine Förderrinne (3, 4, 20) für einen Kommissionierautomaten (1) für Apotheken, die sich in eine Förderrichtung (A,B) erstreckt, wobei zwei Rinnenbegrenzungswände (7, 8, 25, 26), deren Oberflächen (9, 10) nicht parallel zueinander verlaufen, wobei die den Oberflächenverlauf zumindest einer Rinnenbegrenzungswand (7, 8, 25, 26) in einer Querschnittsebene, die senkrecht zur Förderrichtung (A, B) verläuft und die Vertikale beinhaltet, darstellende Linie nicht horizontal und nicht vertikal verläuft.

## Beschreibung

Die Erfindung betrifft eine Förderrinne für einen Kommissionierautomaten für Apotheken sowie Fördervorrichtung, Drehteller und Kommissionierautomat für Apotheken sowie ein Verfahren zum Betreiben einer Förderinne.

Es gibt Kommissionierautomaten für Apotheken, die Medikamente in Regalen lagern und auf Anforderung auslagern. Sie bestehen in der Regel aus Regalen zur Ablage der Medikamente und mindestens einem verfahrbaren Regalbediengerät, das mit einem Manipulator die Medikamente in die Regale einlagert und aus diesen wieder entnimmt und an Ausgabestellen ausgibt.

Zur Einlagerung muss die Medikamentenschachtel (-dose, -flasche, -tube), nachfolgend auch als "Stückgut" bezeichnet, eindeutig bezeichnet werden, (z.B. durch Lesen des aufgedruckten Barcodes) und dem Kommissionierautomaten so dargereicht werden, dass das eingebaute Regalbediengerät den einzelnen Artikel greifen und im Lager ablegen kann. Hierzu dienen in der Regel (schon aus Sicherheitsgründen) Zwischenpuffer, wie z.B. ein Förderband, das den Artikel von einer Auflagestelle in den Zugriffsbereich des Regalbediengeräts fördert oder ein Umsetzgreifer, der von einem Außenförderband die Artikel auf Tablare innerhalb des Automaten ablegt, von denen sie das Regalbediengerät aufnimmt. Oder es wird ein durch mindestens einen durch Rollladen/durch eine Tür etc. verschlossener Regalbereich vorgesehen, in die der Benutzer die Artikel legt. In geöffnetem Zustand können die Artikel eingelegt werden und das Regalbediengerät hat keinen Zugriff; im geschlossenen Zustand hat das Regalbediengerät Zugriff und für Benutzer ist der Bereich verschlossen. Neben dieser allen Lösungen gemeinsamen Grundfunktion (einzelne identifizierte Objekte in den Zugriffsbereich des Handhabungssystems zu bringen, ohne dass sich Bediener und Regalbediengerät begegnen) kann eine Vermessung hilfreich sein, da sie es der Steuerung ermöglicht, rechtzeitig Artikel zu erkennen, die von den Dimensionen außerhalb der Spezifikation liegen, eine unerwünschte Orientierung haben (z.B. hochkant und damit instabil bereitgestellte Packungen) oder bereits im Vorfeld nach einem geeigneten freien Lagerplatz für diese Packungsdimension zu suchen.

Die Notwendigkeit einzeln auf einen Artikel zugreifen zu können schließt das Greifen von gewünschten Gruppenformationen ein. Selbst wenn 2 oder mehr Artikel gleichzeitig gegriffen werden, benötigt die Gerätesteuerung eine Information, welche dies sind und sie müssen orientiert und so hingelegt sein, wie sie weiter verarbeitet werden können. Eine lose, unbestimmte Gruppe von Artikeln, die ggf. irgendwie übereinander oder aneinanderliegen, ist vom Regalbediengerät des Kommissionierautomaten nicht zu greifen.

Die Medikamente werden vom Großhändler als lose Schüttgutsammlung in Behältern angeliefert. Zur Befüllung des Automaten müssen nun die Artikel einzeln aus dem Behältnis genommen werden, mit Hilfe eines Barcodescanners identifiziert (oder auf andere Weise der Gerätesteuerung die Identität mitgeteilt werden) und einzeln im Puffer abgelegt werden. Hinzu kommt, dass die meisten Apotheker das auf den Packungen gedruckte Verfallsdatum eingeben, damit sie einen klaren Überblick über das Verfallsdatum eines jeden Artikels haben. Dadurch kann der Automat, wenn mehrere Artikel der gleichen Identität vorhanden sind, den ältesten zuerst auslagern. Es kann ggf. Ware, die kurz vor dem Verfall steht, ausgelagert und zurückgegeben werden, oder es können verfallene Artikel zielgerichtet ausgelagert werden.

Wenn der Puffer voll ist (und das ist bei den Automaten in der Regel nach 70 bis 120 Packungen der Fall), muss gewartet werden, bis das Regalbediengerät den Puffer geleert hat. Dies dauert ca. 10 bis 20 Minuten. Erst dann kann die Arbeit wieder fortgesetzt werden. Obwohl die Apotheke mehrmals am Tag vom Großhändler beliefert wird, enthalten Lieferungen häufig 200 und mehr Packungen.

Den Puffer zu vergrößern ist in der Regel teuer (z.B. 2. Förderband), geht aber in jedem Fall zu Lasten der Kapazität (das 2. Band nimmt erheblichen Lagerplatz im Innenraum weg).

Aber auch wenn der Puffer groß genug wäre, bleibt die manuelle Arbeit.

Aus DE 10 2004 012 133 A1 ist ein Automat bekannt, der in einen Trichter geschüttete Packungen vereinzeln soll. Dem Gerät fehlen zunächst die für die Einlagerung wichtigen Funktionen der Identifikation und der Verfallsdatenerfassung. Zum Weiteren funktioniert die beschriebene Methode nicht zuverlässig. Der Transport über eine geneigte Ebene (z.B. geneigtes Förderband mit aufvulkanisierten quer zur Transportrichtung verlaufenden Rippen) führt nicht dazu, dass die Artikel ausschließlich nebeneinander auf die folgende Fläche kippen. Wird eine hohe Packung von der Rippe erfasst, stellt diese hohe Packung eine nicht seltene Möglichkeit dar, dass mehrere niedrige Packungen vor der hohen Packung übereinander liegen. Somit fallen immer wieder mehrere Packungen auch übereinander auf die sich an die Oberkante anschließende Fläche.

Die Erkennung einzelner Packungen durch eine Kamera ist ebenfalls nicht zuverlässig. Versetzte Packungen sind an den verspringenden Kanten zu identifizieren. Packungen, die ihre Kanten deckungsgleich nebeneinander oder hintereinander haben, sind nicht auseinanderzuhalten. Dies ist auch nicht ohne weiteres an Hand des Musters möglich. So gibt es Packungen, die auf dem einen Teil der Packung tief dunkelblau sind und in der anderen Hälfte komplett weiß. Die quer zur Packung laufende Trennlinie wird von einem Vision-System als Packungsgrenze erkannt. Dies zu vermeiden, müssten ggf. alle Medikamente mit den Ansichten ihrer verschiedenen Seiten eingelernt werden. In Deutschland sind ca. 180.000 Medikamente im Angebot, mit 6 Seiten eines Quaders. Die Hersteller wechseln zudem aus Marketinggründen häufig das Design einer Packung.

Durch die mangelhafte Erkennung um wie viele Packungen es sich handelt, wird auch ein Sauger ggf. nicht zuverlässig greifen. Entweder wird er außermittig aufsetzen und bei schwereren Packungen diese dadurch verlieren oder mit dem Sauger auf der Kante zwischen Packungen aufsetzen und kein Vakuum aufbauen können. Das anschließende empirische Versetzen des Greifers nimmt Zeit in Anspruch und ist eine zu vermeidende Zusatzarbeit.

Entsprechend ist auch die Größenvermessung nicht zuverlässig, da dicht aneinanderliegende Packungen nicht als Einzelpackungen vermessen werden können. Selbst wenn eine Packung korrekt ermittelt wird, so sind nur 2 Kantenlängen ermittelbar. Die Höhe der Packung muss von einem anderen Blickwinkel erkannt werden, was bei Vorhandensein von ggf. mehreren Packungen nicht ohne weiteres möglich ist. (z.B. gegenseitiges Verdecken).

Vor diesem Hintergrund lag der Erfindung die Aufgabe zugrunde, die Vereinzelung des Stückguts und/oder das Erkennen von Merkmalen des Stückguts zu verbessern.

Diese Aufgabe wird durch die Förderrinne gemäß Anspruch 1, die Fördervorrichtung gemäß Anspruch 6, den Drehteller gemäß Anspruch 7 und den Kommissionierautomaten gemäß Anspruch 12 gelöst. Vorteilhafte Ausführungsformen sind in den Unteransprüchen und der hier nachfolgenden Beschreibung angegeben.

Gemäß einem Aspekt der Erfindung wird eine Förderrinne für einen Kommissionierautomaten für Apotheken geschaffen, die sich in eine Förderrichtung erstreckt.

Die erfindungsgemäße Förderrinne wird durch zwei Rinnenbegrenzungswände begrenzt. Diese erstrecken sich insbesondere bevorzugt entlang der gesamten Erstreckung der Förderrinne in Förderrichtung. Es ist aber auch denkbar, dass am Ende der Förderrinne für die Ausgabe des entlang der Förderrinne geförderten Stückguts eine besondere Öffnungsgeometrie, beispielsweise eine Aufweitung, geschaffen wird. Es können Bauformen der Förderrinne gewählt werden, bei denen das zu fördernde Stückgut in einen Aufnahmebereich in die Förderrinne verbracht wird, beispielsweise in diese geworfen wird oder entlang einer Rinnenbegrenzungswand in diese rutscht. Von dieser Aufnahmeposition erstrecken sich in einer bevorzugten Ausführungsform die Rinnenbegrenzungswände im Wesentlichen bis zum Ende der Förderrinne, an der das geförderte Stückgut an eine andere Baugruppe des Kommissionierautomaten abgegeben werden kann. Stromaufwärts der Aufnahmeposition (entgegen der Förderrichtung) kann die Förderrinne anders als mit Rinnenbegrenzungswänden ausgestaltet werden. Beispielsweise kann sich die Förderrinne hier verengen oder geschlossen sein, um ein Herausfallen von taumelnd in die Förderrinne rutschendem Stückgut zu vermeiden.

Bei der erfindungsgemäßen Förderrinne sind zwei Rinnenbegrenzungswände vorgesehen, deren Oberflächen nicht parallel zueinander verlaufen. Bei zumindest einer Rinnenbegrenzungswand verläuft die den Oberflächenverlauf in einer Querschnittsebene, die senkrecht zur Förderrichtung verläuft und die Vertikale beinhaltet, darstellende Linie nicht horizontal und nicht vertikal. Mit der so verlaufenden Rinnenbegrenzungswand können Bewegungen des zu fördernden Stückguts senkrecht zur Oberfläche der Rinnenbegrenzungswand vermieden werden.

In einer bevorzugten Ausführungsform stehen die die Förderrinne bildenden Oberflächen der Rinnenbegrenzungswände im Winkel von 90° oder mehr, insbesondere bevorzugt von mehr als 90° zueinander. Eine Anordnung von 90° zueinander bewirkt in einer besonders bevorzugten Ausführungsform, dass ein quaderförmiges Stückgut mit einer ersten Begrenzungswand an einer ersten Rinnenbegrenzungswand und einer weiteren Begrenzungswand an einer zweiten Rinnenbegrenzungswand anliegen kann, insbesondere mit beiden Begrenzungswänden flächig an der jeweiligen Rinnenbegrenzungswand anliegen kann. In einer bevorzugten Ausführungsform handelt es sich dabei um einander benachbarte Begrenzungswände des Stückguts, die unter Bildung einer Kante aneinandergrenzen. Bei dieser Ausführungsform liegt das Stückgut gut in der Förderrinne. Eine derartige Anordnung kann jedoch auch zu einem Verklemmen des Stückguts führen. Deswegen werden Ausführungsformen bevorzugt, bei denen die Rinnenbegrenzungswände in einem Winkel von mehr als 90°, insbesondere bevorzugt in einem Winkel von mehr als 100° zueinander stehen. Zugleich sollen die Rinnenbegrenzungswände miteinander auch eine Rinne bilden, sodass die die Förderrinne bildenden Oberflächen der Rinnenbegrenzungswände vorzugsweise in einem Winkel von weniger als 150°, insbesondere bevorzugt von weniger als 140° und ganz besonders bevorzugt von weniger als 120° zueinander stehen.

In einer bevorzugten Ausführungsform verläuft bei beiden Rinnenbegrenzungswänden die den jeweiligen Oberflächenverlauf in einer Querschnittsebene, die senkrecht zur Förderrichtung verläuft und die Vertikale beinhaltet, jeweils darstellende Linie nicht horizontal und nicht vertikal. Die Rinnenbegrenzungswände verlaufen insbesondere V-förmig, insbesondere unter Bildung eines eingeschlossenen Winkels von 90°, insbesondere bevorzugt mehr als 90° zwischeneinander. Bei einer derartigen Ausführungsform wird das Stückgut durch die Schwerkraft gut im Grund der Förderrinne gehalten, insbesondere bevorzugt stellt sich allein durch die Schwerkraft eine Aufnahmeposition ein, bei der bei einem quaderförmigen Stückgut zwei benachbarte Begrenzungswände flächig an ihnen jeweils zugeordneten Rinnenbegrenzungswänden anliegen.

In einer bevorzugten Ausführungsform haben die Rinnenbegrenzungswände gleich große Oberflächen. Es ist jedoch auch denkbar, eine Rinnenbegrenzungswand in einer Richtung senkrecht zur Förderrichtung kürzer auszubilden als die gegenüberliegende Rinnenbegrenzungswand. An die kürzer ausgebildete Rinnenbegrenzungswand kann sich beispielsweise ein gewinkelter Oberflächenabschnitt anschließen. Dieser kann insbesondere bevorzugt horizontal ausgebildet sein oder ist horizontaler als die Rinnenbegrenzungswand, an die er angrenzt. Dieser Oberflächenabschnitt kann dazu verwendet werden, Stückgut in die Förderrinne zu schieben. Das Stückgut liegt auf dem Oberflächenabschnitt auf und wird mit geeigneten Mitteln über diesen Oberflächenabschnitt bewegt, wobei unter den geeigneten Mitteln auch solche verstanden werden, wo auf dem Oberflächenabschnitt liegendes Stückgut in die Förderrinne bewegt wird, weil es durch weiteres Stückgut, das mit einem Förderband an den Oberflächenabschnitt herangeführt wird, in die Förderrinne bewegt wird. In der Ausführungsform, in der die Erstreckung der einen Rinnenbegrenzungswand in eine Richtung senkrecht zur Förderrichtung kürzer ausgebildet ist als die Oberfläche der gegenüberliegenden Rinnenbegrenzungswand, kann die gegenüberliegende, größer ausgeführte Rinnenbegrenzungswand ein Überspringen von in die Förderrinne bewegtem Stückgut verhindern.

In einer bevorzugten Ausführungsform ist eine, insbesondere sind beide Rinnenbegrenzungswände mit der Bildung der Förderrinne dienenden, ebenen Oberflächen ausgestattet. Dadurch lässt sich die Rinnenbegrenzungswand besonders einfach herstellen. Insbesondere bevorzugt wird die Rinnenbegrenzungswand aus einem Blech oder aus einem Kunststoff hergestellt. Da jedoch denkbar ist, dass für die Rinnenbegrenzungswand Verstärkungen unterhalb der der Bildung der Förderrinne dienenden Oberfläche der Rinnenbegrenzungswand vorgesehen sind, ist die vorstehende Beschreibung der Erfindung insbesondere anhand der der Bildung der Förderrinne dienenden Oberfläche der jeweiligen Rinnenbegrenzungswand beschrieben worden. Damit soll angezeigt werden, dass auch stärker ausgebildete Körper, und insbesondere Körper mit sich ändernden dreidimensionalen Geometrien, herangezogen werden, um mit einer oder mehrerer ihrer Oberflächen eine der Bildung der Förderrinne dienende Oberfläche einer Rinnenbegrenzungswand zu bieten. Die erfindungsgemäße Förderrinne kann dabei insbesondere bevorzugt einteilig ausgeführt sein.

In einer bevorzugten Ausführungsform wird zumindest bei einer der Rinnenbegrenzungswände die eine Oberfläche der Rinnenbegrenzungswand durch die Oberfläche eines Förderbands gebildet. Insbesondere bevorzugt ist die Bewegungsrichtung des Förderbands im Wesentlichen identisch mit der Förderrichtung. Insbesondere bevorzugt kann das Förderband sowohl in Förderrichtung als auch gegenläufig zur Förderrichtung bewegt werden. Insbesondere bevorzugt wird diese Ausführungsform mit der im Anspruch 4 beschriebenen Ausführungsform kombiniert, gemäß der die Förderrinne einen teilweise entlang der Förderrichtung verfahrbaren Schubklotz oder Greifer ausweist, der insbesondere bevorzugt gemäß der Fortbildung gemäß Anspruch 5 durch einen im Grund der Förderrinne sich in Förderrichtung erstreckenden Schlitz in das Rinneninnere hineinragt. Durch das Vorsehen des Förderbandes können verschiedene Eingriffe auf das Stückgut ausgeübt werden. Zum einen kann bei ruckhaftem Betrieb des Förderbands eine Art Rütteln auf das Stückgut bzw. auf mehrere in der Förderrinne befindliche Stückgüter ausgeübt werden, das der Positionierung und/oder Vereinzelung der Stückgüter zuträglich ist. Auch können in der bevorzugten Ausführungsform mit Schubklotz oder Greifer durch Geschwindigkeitsunterschiede in der Bewegung des Schubklotzes bzw. Greifers und des Förderbandes bis hin zu gegenläufigen Bewegungen (Schubklotz bzw. Greifer bewegt sich in die eine Richtung, Förderband bewegt sich in die entgegengesetzte Richtung) vorteilhafte Effekte erzielt werden. Bewegt sich beispielsweise das Förderband langsamer oder gegenläufig zum Schubklotz bzw. Greifer, so kann es bei zwei übereinanderliegenden Stückgütern beispielsweise dem einen, oberen eine andere Bewegung aufprägen, als dem anderen, unteren, von dem Schubklotz bzw. Greifer bewegten. Beispielsweise bewegt sich das obere Stückgut dann langsamer (wird durch das Förderband in seiner Bewegung in Förderrichtung heruntergebremst) oder das obere Stückgut bewegt sich sogar gegenläufig zur Förderrichtung. Dies kann für die Vereinzelung der Stückgüter in der Förderrinne dienlich sein.

Es sind auch Ausführungsformen denkbar, bei denen die bzw. eine der Oberflächen nicht eben ausgebildet sind. So sind auch bauchige Verläufe vorstellbar, was besonders dann Vorteile bieten kann, wenn vornehmlich Flaschen als Stückgut eingelagert werden sollen.

In einer bevorzugten Ausführungsform schneiden sich die Ebenen, in denen die ebene Oberfläche der beiden Rinnenbegrenzungswände angeordnet sind, im Bereich des Grunds der Förderrinne. Es sind Ausführungsformen denkbar, bei denen die Oberflächen der Rinnenbegrenzungswände im Grund der Förderrinne nicht unmittelbar aneinanderstoßen. Beispielsweise ist gemäß einer bevorzugten Ausführungsform ein zumindest teilweise entlang des Grunds der Förderrinne verlaufender Schlitz vorgesehen.

In einer bevorzugten Ausführungsform weist die Förderrinne einen zumindest teilweise entlang der Förderrichtung verfahrbaren Schubklotz oder Greifer auf. Der Schubklotz kann dabei auch als Stift ausgebildet sein. Der Greifer kann auch als Haken ausgebildet sein, der das zu fördernde Stückgut endseits ergreift und hinter sich herzieht. Ebenso sind als Greifer Saugnäpfe oder Greifer mit das Stückgut an gegenüberliegenden Begrenzungswänden des Stückguts angreifenden Elementen, insbesondere bevorzugt Stiften, denkbar. In einer bevorzugten Ausführungsform ragt der entlang der Förderrichtung verfahrbare Schubklotz aus einem im Grund der Förderrinne sich in Förderrichtung erstreckenden Schlitz hinaus. In einer bevorzugten Ausführungsform sind ein oder mehr Schubklötze an einer unterhalb der Förderrinne angeordneten umlaufenden Kette, einem umlaufenden Strang oder Band oder dergleichen angeordnet. Die Länge dieses Elements, mit dem der Schubklotz verbunden ist, ist zwischen den jeweiligen Umlenkpunkten etwas länger als der Weg, den das Stückgut in der Förderrinne von seiner zu erwartenden Aufnahmeposition bis zu einer Ausgabeposition am Ende der Förderrinne durchläuft. Dadurch ragt der Schubklotz entgegen der Förderrichtung gesehen bereits jenseits der von dem Stückgut in der Aufnahmeposition eingenommenen Position aus der Rinne hinaus. Damit kann sichergestellt werden, dass der Schubklotz das entlang der Förderrinne zu fördernde Stückgut gut ergreift. In einer alternativen Ausführungsform wird der Schubklotz bzw. der Greifer in Förderrichtung vorwärts und rückwärts bewegt. Dies kann beispielsweise durch eine entsprechend bewegte Kette oder ein entsprechend bewegtes Band oder dergleichen oder durch einen Antriebszylinder erreicht werden.

In einer bevorzugten Ausführungsform hat der Schubklotz eine längliche Form und erstreckt sich mit seiner Längserstreckung insbesondere bevorzugt senkrecht zur Förderrichtung. In einer besonders bevorzugten Ausführungsform weist der Schubklotz in einer Ebene, die senkrecht zur Längserstreckung steht, eine quadratische, rechteckige oder insbesondere bevorzugt dreieckige Querschnittsform auf. Insbesondere bevorzugt bleibt die Querschnittsform des Schubklotzes über einen Teil seiner Längserstreckung, insbesondere über den Teil seiner Längserstreckung, der in die Förderrinne ragt, gleich. Dabei kann sich die Größe des Querschnitts unter Beibehaltung der Querschnittsform ändern, der Schubklotz beispielsweise zu seinem freien Ende hin zulaufend ausgeführt sein. Bei einer dreieckigen Querschnittsform ist es insbesondere bevorzugt, wenn eine Basis des Dreiecks nach vorne, in Förderrichtung weist und eine Spitze nach hinten, entgegen der Förderrichtung weist. Ein so ausgeführter Schubklotz kann bei einer Vorwärtsbewegung das Stückgut gut schieben und bei einer Rückwärtsbewegung Gegenstände aus dem Grund der Förderrinne zur Seite schieben. Ergänzend oder alternativ kann der Schubklotz in einer bevorzugten Ausführungsform in Förderrichtung länglich ausgebildet sein und eine Schräge aufweisen, die sich von einem höheren, in Förderrichtung vorderen Niveau nach hinten, entgegen der Förderrichtung in Richtung auf den Grund der Förderrinne hin absenkt und insbesondere bevorzugt bis in den Grund der Förderrinne ausgeführt ist. Eine derartige Ausgestaltung erlaubt es, bei einer Rückwärtsbewegung des Schubklotzes entgegen der Förderrichtung Gegenstände, insbesondere Stückgut, das in Förderrichtung hinter dem Schubklotz liegt, wie nach Art eines Keils oder Pflugs in Richtung fort vom Grund der Förderrinne anzuheben und insbesondere bevorzugt über die Schräge relativ zur Vorderseite des Schubklotzes nach vorne gleiten zu lassen, bis das Stückgut vor dem Schubklotz wieder herunterfällt.

In einer besonders bevorzugten Ausführungsform kann der Schubklotz eine in Förderrichtung über einen Grundkörper des Schubklotzes hinausragende Nase aufweisen. Dadurch erfährt der Schubklotz eine Erstreckung in Förderrichtung, die größer ist, als der Grundkörper. In Ausführungsformen, bei denen der Grundkörper für eine Bewegung des Schubklotzes angetrieben wird, beispielsweise über eine Kette, ein Band oder einen Antriebszylinder und die Bewegungsspanne des Schubklotzes durch diesen Antrieb beschränkt wird, beispielsweise kurz vor dem Ende der Förderrinne endet oder mit dem Ende der Förderrinne endet, kann das Vorsehen einer Nase dazu dienen, die Übergabe des Stückgutes von der Förderrinne an die nächst nachfolgende Baugruppe zu verbessern.

Bei einem erfindungsgemäßen Verfahren zum Betreiben der erfindungsgemäßen Förderrinne rutscht ein Stückgut aufgrund der Schwerkraft entlang der Oberfläche einer Rinnenbegrenzungswand, bis das Stückgut in seiner Aufnahmeposition im Grund der Rinne zu liegen kommt. Hier liegt das Stückgut mit zwei unter Bildung einer Kante benachbarten Begrenzungswänden an einer jeweiligen Begrenzungswand zugeordneten Rinnenbegrenzungswand an. Dadurch wird das quaderförmige Stückgut gut in der Förderrinne gehalten. Der entgegen der Förderrichtung gesehen hinter der Aufnahmeposition aus einem im Grund der Förderrinne vorgesehenen Schlitz herausragende Schubklotz wird durch Antrieb einer Kette, an der er festgelegt ist, an das Schüttgut herangeführt und schiebt dieses in Förderrichtung entlang der Förderrinne, bis das Schüttgut die Förderrinne an einem Ausgang verlässt, beispielsweise aus der Förderrinne herausfällt.

In einer bevorzugten Ausführungsform ist eine Rüttelvorrichtung vorgesehen, die zumindest eine Rinnenbegrenzungswand, insbesondere bevorzugt auch nur kurzfristig (einige Millisekunden oder einige wenige Sekunden) in eine Schwingung versetzen kann. Die Rüttelvorrichtung kann auch als Klopfvorrichtung ausgebildet sein, die an eine Rinnenbegrenzungswand klopfen kann. Die Rüttelvorrichtung kann dazu eingesetzt werden, ein in der Förderrinne verkantetes Stückgut zu lösen, so dass es auf den Grund der Förderrinne gleitet oder aber miteinander verkantete Stückgüter in der Förderrinne voneinander zu lösen, so dass sie sich weiter in Richtung auf den Grund der Förderrinne bewegen.

In einer bevorzugten Ausführungsform weist die Förderrinne Sensoren auf, die das Vorhandensein eines Stückgutes an einer bestimmten Stelle der Förderrinne und/oder das Passieren eines Stückgutes an einer bestimmten Stelle der Förderrinne feststellen können, beispielsweise mittels einer Lichtschranke. Derartige Sensoren können dafür eingesetzt werden, die Steuerung von Komponenten der erfindungsgemäßen Förderinne zu unterstützen, beispielsweise das Bewegen eines in einer bevorzugten Ausführungsform vorgesehenen Schubklotzes oder Greifers anzusteuern oder beispielsweise eine gemäß einer bevorzugten Ausführungsform vorgesehene Rüttelvorrichtung anzusteuern.

Bei einer erfindungsgemäßen Fördervorrichtung für einen Kommissionierautomaten für Apotheken sind zwei oder mehr erfindungsgemäße Förderrinnen vorgesehen, wobei die Förderrichtungen der Förderrinnen unterschiedlich ausgerichtet sind. In einer bevorzugten Ausführungsform ist die zweite Förderrinne an das Ende der ersten Förderrinne angrenzend angeordnet, so dass aus dem Ende der ersten Förderrinne herausgefördertes Stückgut in die zweite Förderrinne übergeben wird, insbesondere in die zweite Förderrinne fällt. Eine derartige Anordnung zweier erfindungsgemäßer Förderrinnen hat den Vorteil, dass in Richtung senkrecht zur Förderrichtung der ersten Förderrinne übereinandergestapeltes Stückgut in die im Winkel zur ersten Förderrinne verlaufenden zweiten Förderrinne fällt und dort nebeneinander zu liegen kommt. Insbesondere bevorzugt stehen die Förderrichtungen der beiden Förderrinnen im Winkel von 90° zueinander. Es sind aber auch anderem Winkel denkbar, beispielsweise 45°, 60°, 70° oder auch mehr als 90° beispielsweise 100°, 120°, 145°. In einer bevorzugten Ausführungsform ist der Grund der ersten Rinne höher angeordnet als der Grund der zweiten Förderrinne.

In einer bevorzugten Ausführungsform der erfindungsgemäßen Förderrinne, aber auch in bevorzugten Ausführungsformen der erfindungsgemäßen Fördervorrichtung, verläuft die jeweilige Förderrichtung einer Förderrinne horizontal. Es sind aber auch Ausführungsformen denkbar, bei denen die Förderrichtung der Förderrinne nicht horizontal verläuft und das Stückgut beispielsweise nach Art einer Rutsche entlang der Förderrinne rutscht, die Fördervorrichtung von der Aufnahmeposition des Stückguts also in einem Winkel zur Horizontalen nach unten weist. Ebenso kann eine winkelig zur Horizontalen verlaufende Förderrichtung das Fördern des Stückguts durch einen gegebenenfalls vorhandenen Schubklotz oder Greifer vereinfachen.

Der erfindungsgemäße Drehteller für einen Kommissionierautomaten für Apotheken weist einen um eine Rotationsachse drehbar antreibbaren Teller auf, dessen zur Aufnahme von Stückgut vorgesehene Oberfläche durch die Oberfläche von mindestens zwei Tellerelementen gebildet wird. Das eine Tellerelement kann relativ zum anderen Tellerelement um eine Schwenkachse schwenken, die nicht parallel zur Rotationsachse verläuft und nicht der Rotationsachse entspricht. Mit einem derartigen Drehteller kann eine erfindungsgemäße Förderrinne gebildet werden, wenn die beiden Tellerelemente um die Schwenkachse so verschwenkt werden, dass die durch ihre Oberflächen dann gebildeten Oberflächen von Rinnenbegrenzungswänden nicht parallel zueinander oder in der gleichen Ebene verlaufen. Insbesondere wenn die die zur Aufnahme von Stückgut vorgesehene Oberfläche bildenden Oberflächen der mindestens zwei Tellerelemente in einen Winkel von 90° zueinander gebracht werden, können diese das auf dem Drehteller liegende Stückgut gut stabilisieren. Dadurch kann verhindert werden, dass bei einer Drehung des Drehtellers das Stückgut von der zur Aufnahme von Stückgut vorgesehenen Oberfläche rutscht. In einer bevorzugten Ausführungsform entspricht die Schwenkachse der Förderrichtung der durch den Drehteller gebildeten erfindungsgemäßen Förderrinne. In einer bevorzugten Ausführungsform kann die Schwenkachse in einer ersten Position horizontal verlaufen. Durch Anheben eines oder beider Tellerelemente außerhalb des Flächenschwerpunkts der zur Aufnahme von Stückgut vorgesehenen Oberfläche kann die Schwenkachse aus der Horizontalen gekippt werden, so dass auf dem Drehteller liegendes Stückgut vom Drehteller rutschen kann. Dabei kann durch Rotation des Drehtellers vor dem Schrägstellen der Schwenkachse die Richtung festgelegt werden, in die das Stückgut von dem Drehteller rutschen soll.

In einer bevorzugten Ausführungsform sind die Tellerelemente als Kreisbogenelemente, insbesondere als solche mit einem eingeschlossenen Winkel von jeweils 180°, ausgeführt. In einer alternativen Ausführungsform sind die Tellerelemente rechteckig ausgebildet.

Es ist auch denkbar, dass zunächst beide Tellerelemente in der Horizontalen angeordnet sind und dann durch geeignete Hubelemente das eine Tellerelement nach oben aus der Horizontalen gehoben wird, während durch Rückzug des anderen Hubelements dem zweiten Tellerelement erlaubt wird, nach unten aus der Horizontalen zu verschwenken. Dadurch wird eine Rutsche gebildet, entlang der das auf dem Drehteller befindliche Stückgut gleiten kann.

In einer bevorzugten Ausführungsform weist der erfindungsgemäße Drehteller ein Hubelement auf, das ein Tellerelement anheben kann. Ein derartiges Hubelement kann beispielsweise stiftartig ausgebildet sein. Das Hubelement kann von unten an das Tellerelement herangeführt werden und das Tellerelement aus der Horizontalen in eine geneigte Position verbringen. In einer bevorzugten Ausführungsform ist ein Hubelement für ein Tellerelement vorgesehen. Dadurch kann bei dem erfindungsgemäßen Drehteller zumindest das eine Tellerelement in seiner Relativposition zum anderen Tellerelement geändert werden. In einer besonders bevorzugten Ausführungsform sind zwei Tellerelemente vorgesehen, wobei jedem Tellerelement ein Hubelement zugeordnet ist. Es sind auch Ausführungsformen denkbar, bei denen einem Tellerelement mehrere Hubelemente zugeordnet sind. Fährt man die Hubelemente unterschiedlich weit in der Vertikalen aus, so können dadurch Lagen des Tellerelements erreicht werden, bei denen die die Tellerelemente verbindende Schwenkachse nicht horizontal verläuft. Dieser Effekt kann auch erreicht werden, wenn das jeweils eine einem Tellerelement zugeordnete Hubelement außermittig angeordnet ist, insbesondere bevorzugt nicht auf der senkrecht zur Schwenkachse und durch den Flächenschwerpunkt der durch die Oberflächen der beiden Tellerelemente gemeinsam gebildeten Oberfläche verlaufenden Linie angeordnet ist.

In einer bevorzugten Ausführungsform sind die Tellerelemente gelenkig miteinander verbunden. In einer bevorzugten Ausführungsform ist der durch die gelenkige Verbindung erlaubte Schwenkwinkel zwischen den Tellerelementen größer als 180°. Dadurch können neben förderrinnenartigen Anordnungen der Tellerelemente auch firstartige Anordnungen der Tellerelemente geschaffen werden.

In einer bevorzugten Ausführungsform ist ein Begrenzer vorgesehen, der ein Schwenken der Tellerelemente relativ zueinander in eine Schwenkrichtung begrenzt. Beispielsweise kann es vorgesehen sein, dass die Tellerelemente zwar zur Bildung einer Förderrinne aufeinander zugeschwenkt werden können, aber über die ebene Lage, in der die zur Aufnahme von Stückgut vorgesehenen Oberflächen der beide Tellerelemente in der gleichen Ebene liegen (auch wenn die aus der Horizontalen herausgeschwenkt ist) nicht weiter schwenken können, somit keine firstartigen Anordnungen annehmen können.

Die erfindungsgemäße Förderrinne, die erfindungsgemäße Fördervorrichtung und der erfindungsgemäße Drehteller werden insbesondere für Kommissionierautomaten für Apotheken eingesetzt. Es hat sich gezeigt, dass das bei Kommissionierautomaten für Apotheken behandelte Stückgut sich besonders gut mit den erfindungsgemäßen Gegenständen handhaben lässt.

Der erfindungsgemäße Kommissionierautomat für Apotheken weist eine erfindungsgemäße Förderrinne, eine erfindungsgemäße Fördervorrichtung und/oder einen erfindungsgemäßen Drehteller auf.

In einer bevorzugten Ausführungsform sieht der erfindungsgemäße Kommissionierautomat einen Lift vor, mit dem der Drehteller innerhalb des Kommissionierautomaten von einer Aufnahmeposition in eine Abgabeposition bewegt werden kann. Der erfindungsgemäße Kommissionierautomat kann jedoch auch einen zu dem Drehteller zusätzlichen Lift aufweisen. Dieser kann in einer bevorzugt Ausführungsform neben dem Drehteller angeordnet sein, so dass durch ein Kippen eines oder mehrerer Tellerelemente des Drehtellers das Stückgut von dem Drehteller auf eine Förderplattform des Lifts rutschen kann. Ebenso ist es denkbar, ergänzend alternativ Greifer oder Schubelemente vorzusehen, die das Stückgut von dem Drehteller auf eine Förderplattform des Lifts schieben oder heben. Die Förderplattform des Lifts kann in einer bevorzugten Ausführungsform in zwei Abgabepositionen bewegt werden. Zum einen kann die Förderplattform der bevorzugten Ausführungsform in eine Abgabeposition angehoben werden, in der sie das auf ihr liegende Stückgut auf eine Fördervorrichtung übergibt, die das Stückgut wieder in den Kreislauf zurückgibt, beispielsweise erneut zur Förderinne fördert. Dies bietet sich an, wenn das Stückgut bei einer Untersuchung auf dem Drehteller nicht eindeutig identifiziert werden konnte. In der bevorzugten Ausführungsform ist eine zweite Abgabeposition vorgesehen, in der die Förderplattform des Lifts das Stückgut beispielsweise einem Manipulator einer Einlagerungsvorrichtung anbietet, der das Stückgut von der Förderplattform aufnimmt und in einem Regalsystem des Kommissionierautomatens einlagert. Dies kann auch dadurch geschehen, dass die Förderplattform in der zweiten Abgabeposition das Stückgut auf eine Übergabeplattform übergibt, von der aus der Manipulator das Stückgut aufnimmt und einlagert.

In einer bevorzugten Ausführungsform weist der Drehteller einen Schlitten auf, mit dem die Tellerelemente verschoben werden können. Dadurch können die Tellerelemente nach Aufnahme eines Stückguts von einer angrenzenden Baugruppe, beispielsweise einer vorgelagerten Förderrinne fortbewegt werden, um mehr Raum für ein Verschwenken eines Tellerelements oder der Tellerelemente zu schaffen.

In einer bevorzugten Ausführungsform des erfindungsgemäßen Kommissionierautomaten ist der Drehteller am Ende einer Förderrinne, insbesondere bevorzugt einer erfindungsgemäßen Förderrinne, angeordnet, insbesondere bevorzugt am Ende einer erfindungsgemäßen Fördervorrichtung. In einer bevorzugten Ausführungsform wird diese Position des Drehtellers als Aufnahmeposition angesehen, weil das aus der Förderrinne austretende Stückgut auf den Drehteller geschoben wird, insbesondere bevorzugt auf den Drehteller fällt. Von dieser Aufnahmeposition kann der Drehteller in eine Abgabeposition bewegt werden. In der Abgabeposition kann der Drehteller das Stückgut beispielsweise zurück in einen Bunker neu gelieferter Stückgüter oder aber in eine Ausschussvorrichtung bewegen, wenn festgestellt wurde, dass das Stückgut auf dem Drehteller nicht eingelagert werden soll. Ebenso kann die Abgabeposition eine Position sein, bei der der Drehteller das auf ihm liegende Stückgut an einen Manipulator abgibt, der das Stückgut in dem Kommissionierautomaten einlagert.

In einer bevorzugten Ausführungsform ist der Lift entlang seines Hubweges von einer Röhre begrenzt, in der der Drehteller verfahren werden kann. Dadurch kann verhindert werden, dass Stückgut während des Transports des Drehtellers durch den Lift von dem Drehteller fällt. Insbesondere bevorzugt können die Tellerelemente des Drehtellers während der Bewegung durch den Lift auch in eine förderrinnenartige Form, insbesondere bevorzugt in eine V-Form, gekippt werden. Dadurch wird das Stückgut ebenfalls gut auf dem Drehteller gehalten.

In einer bevorzugten Ausführungsform weist der erfindungsgemäße Kommissionierautomat zumindest eine Kamera auf, die ein auf dem Drehteller angeordnetes Stückgut erfassen kann. Insbesondere bevorzugt sind zwei Kameras angeordnet, wobei insbesondere bevorzugt eine Kamera von unten und eine Kamera von oben auf den Drehteller gerichtet ist, insbesondere bevorzugt eine oder beide Kameras mit einer Aufnahmerichtung angeordnet sind, die im Winkel zur Vertikalen stehen. Insbesondere bevorzugt können auch drei Kameras vorgesehen sein. Diese können insbesondere so ausgerichtet sein, dass eine erste Kamera das auf dem Drehteller liegende Stückgut von oben, eine zweite Kamera das auf dem Drehteller liegende Stückgut von der Seite und eine dritte Kamera das auf dem Drehteller liegende Stückgut von unten aufnehmen kann. Dies kann auch dadurch erfolgen, dass Spiegel vorgesehen sind. Insbesondere bevorzugt wird die das auf dem Drehteller liegende Stückgut von unten aufnehmende Kamera nicht unterhalb des Drehtellers angeordnet, sondern seitlich. Ein unterhalb des Drehtellers angeordneter Spiegel erlaubt es der seitlich angeordneten Kamera dann das auf dem Drehteller liegende Stückgut von unten aufzunehmen, wenn der Drehteller zumindest teilweise aus Glas, insbesondere bevorzugt Plexiglas oder einem durchsichtigen Kunststoff hergestellt ist. Die seitliche Anordnung der Kamera erlaubt es, den Raum unterhalb des Drehtellers für Antriebe des Drehtellers zu nutzen.

In einer bevorzugten Ausführungsform sind im Bereich des Drehtellers Sensoren für die Distanzmessung vorgesehen. Aus der Kenntnis des Abstandes des Sensors relativ zum Drehteller kann der Sensor bei einem auf dem Drehteller liegenden Stückgut die Abmessung des Stückguts ermitteln.

In einer bevorzugten Ausführungsform sind im Bereich des Drehtellers Sensoren für das Erkennen von an dem Stückgut befestigten Transpondern vorgesehen, beispielsweise zum Erkennen von RFID-Chips.

Ein erfindungsgemäßer Kommissionierautomat weist ein quaderförmiges Stückgut auf, das mit einer ersten Begrenzungswand an einer Rinnenbegrenzungswand und mit einer weiteren Begrenzungswand an einer weiteren Rinnenbegrenzungswand der erfindungsgemäßen Förderrinne bzw. an den Tellerelementen des Drehtellers anliegt, insbesondere bevorzugt mit beiden Begrenzungswänden flächig an der jeweiligen Rinnenbegrenzungswand anliegt. Dadurch wird erreicht, dass das Stückgut gut in der Förderrinne bzw. auf dem erfindungsgemäßen Drehteller gehalten wird.

In einer bevorzugten Ausführungsform des erfindungsgemäßen Drehtellers ist zumindest ein Tellerelement aus einem durchsichtigen Material, insbesondere bevorzugt aus Plexiglas, hergestellt.

Ein erfindungsgemäßes Verfahren zum Betreiben einer erfindungsgemäßen Förderrinne mit zumindest einem teilweise entlang der Förderrichtung verfahrbaren Schubklotz oder Greifer sieht vor, dass der Schubklotz oder der Greifer in Förderrichtung verfahren wird und dabei eine Packung oder eine Gruppe von Packungen entlang der Förderrichtung bewegt, wobei der Schubklotz oder der Greifer angehalten wird, wenn ein Sensor erkennt, dass eine Packung sich über das Ende der Förderrinne hinausbewegt und die Förderrinne verlässt. Das Anhalten des Schubklotzes oder des Greifers bewirkt, dass eine Gruppe von Packungen, die in Förderrichtung hintereinander liegen, vereinzelt werden. Würde der Schubklotz, bzw. der Greifer auch dann noch weiter in Förderrichtung bewegt, wenn eine (die erste) Packung sich über das Ende der Förderinne hinaus bewegt, so würde der Schubklotz, bzw. der Greifer die weiteren Packungen ebenfalls über das Ende der Förderrinne hinausbewegen. Es käme somit nicht zu einer Vereinzelung. Dadurch, dass der Schubklotz, bzw. der Greifer zunächst einmal angehalten wird, wenn eine (die erste) Packung sich über das Ende der Förderinne hinausbewegt und die Förderrinne verlässt, wird sichergestellt, dass die möglicherweise des Weiteren in der Förderrinne befindlichen Packungen in der Förderrinne verbleiben.

In einer bevorzugten Ausführungsform wird der Schubklotz oder der Greifer nach dem Anhalten und insbesondere bevorzugt nach dem Verstreichen einer vorgegebenen Zeit weiter in Förderrichtung verfahren. Wird mittels eines Sensors erkannt, dass trotz des weiteren Verfahrens des Schubklotzes, bzw. des Greifers keine weitere Packung über das Ende der Förderinne herausbewegt wird, liegt ein Betriebszustand vor, bei der der Schubklotz, bzw. der Greifer nur eine einzelne Packung entlang der Förderrinne bewegt hat. Erkennt der Sensor jedoch, dass eine weitere Packung sich über das Ende der Förderrinne hinausbewegt und die Förderrinne verlässt, so wird der Schubklotz, bzw. der Greifer in einer besonders bevorzugten Ausführungsform erneut angehalten. Damit kann sichergestellt werden, dass auch beim Fördern von drei oder mehr Packungen in einer Gruppe, die entlang der Förderrichtung hintereinander angeordnet sind, jede nachfolgende Packung von der vorlaufenden Packung vereinzelt werden kann. Dabei sind auch Ausführungsformen denkbar, bei denen im Bereich des Endes der Förderrinne mehrere Sensoren vorgesehen sind, beispielsweise ein erster Sensor, der prüft, ob eine Packung sich über das Ende der Förderrinne hinausbewegt und die Förderrinne verlässt, sowie ein zweiter, etwas weiter entfernt von dem Ende der Förderrichtung angeordneter Sensor, der erkennen kann, ob eine Packung in der Förderrinne verbleibt, obwohl der erste Sensor feststellt, dass eine Packung sich über das Ende der Förderrinne hinausbewegt und die Förderrinne verlässt. Damit kann man erkennen, dass noch eine zweite Packung in der Förderrinne liegt und der Schubklotz bzw. der Greifer eine Gruppe von Packungen bewegt hat. Ebenso kann die Position des Schubklotzes oder des Greifers festgestellt werden, wenn er angehalten wird. Werden Packungen einer Standardgröße gefördert, so kann sich aus der Relativposition des angehaltenen Schubklotzes, bzw. des angehaltenen Greifers relativ zum Ende der Förderrichtung die Information ableiten lassen, ob eine Gruppe von Packungen entlang der Förderrinne bewegt wurde oder ob nur eine einzelne Packung entlang der Förderrinne bewegt wurde.

Nachfolgend wird die Erfindung anhand von lediglich Ausführungsbeispielen der Erfindung darstellenden Zeichnungen näher erläutert.

Darin zeigen:
- Fig. 1: einen erfindungsgemäßen Kommissionierautomaten in einer perspektivischen Ansicht;
- Fig. 2: eine Draufsicht auf den erfindungsgemäßen Kommissionierautomaten gemäß Fig. 1;
- Fig. 3: eine schematische Ansicht einer erfindungsgemäßen Förderrinne;
- Fig. 4: den erfindungsgemäßen Drehteller in einer perspektivischen Ansicht in einer ersten Betriebsposition;
- Fig. 5: den Drehteller gemäß Fig. 4 in einer anderen Betriebsposition ebenfalls in einer perspektivischen Ansicht;
- Fig. 6: den erfindungsgemäßen Drehteller gemäß Fig. 4 und 5 in einer weiteren Betriebsposition in einer perspektivischen Ansicht,
- Fig. 7: die Förderrinnen und den Drehteller eines erfindungsgemäßen Kommissionierautomaten in einer zu der in den Fig. 1 und 2 gezeigten Ausführungsform unterschiedlichen Ausführungsform in einer perspektivischen Ansicht und
- Fig. 8: eine Seitenansicht eines in einer erfindungsgemäßen Förderrinne verwendbaren Schubklotzes und
- Fig. 9: eine Schnittansicht des Schubklotzes gemäß Fig. 8 entlang der Line C-C in Fig. 8.

Der erfindungsgemäße Kommissionierautomat 1 weist ein Förderband 2, ein aus zwei erfindungsgemäßen Förderrinnen 3, 4 bestehende erfindungsgemäße Fördervorrichtung 5 auf. Ebenso weist der erfindungsgemäße Kommissionierautomat 1 einen erfindungsgemäßen Drehteller 6 auf.

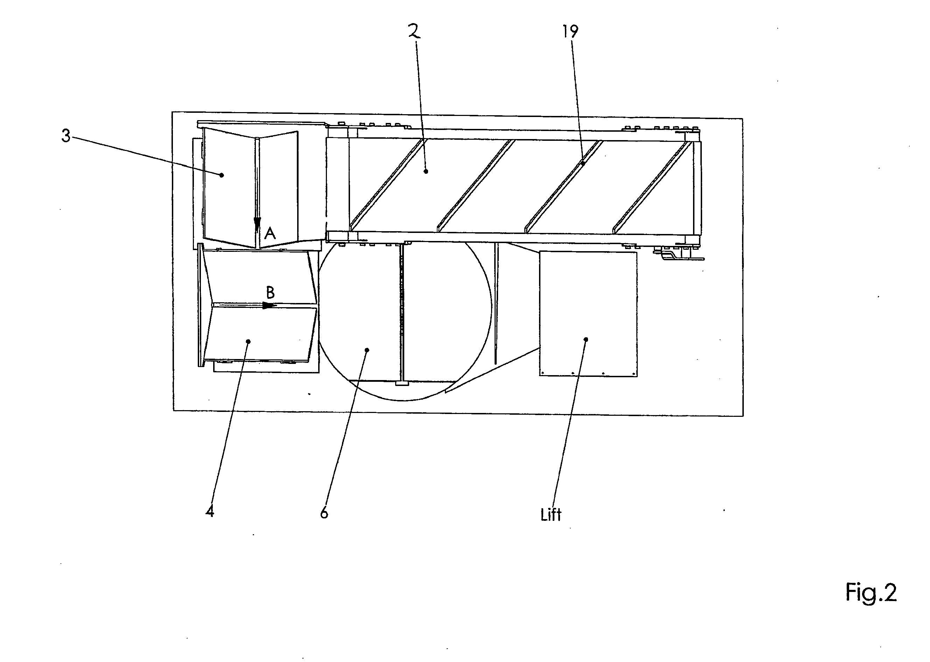

Der Fig. 2 ist zu entnehmen, dass das Band mit schrägen Rippen 19 ausgeführt ist und nicht mit Querrippen, wie sie beispielsweise aus DE 10 2004 012 133 B4 bekannt sind. Dadurch bildet eine große Packung nicht mehr eine Transportwand für einen Stapel von kleinen Packungen, sondern durch die schräge Fläche rutschen die Packungen seitlich und fallen zumindest in den Fällen, in denen die große Packung nicht an einer (in der vorliegenden Ausführungsform nicht vorgesehenen) Bunkerwand anliegen, wie gewünscht hinter eine große Packung.

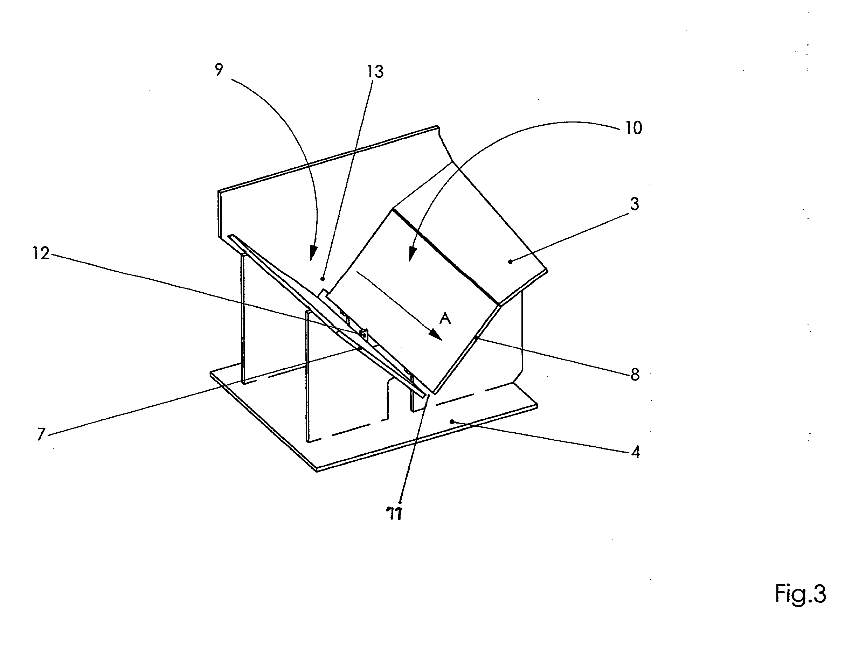

Fig. 3 zeigt, dass die erfindungsgemäße Förderrinne 3 Rinnenbegrenzungswände 7, 8 aufweist, deren Oberflächen 9, 10 nicht parallel zueinander verlaufen. Bei beiden Rinnenbegrenzungswänden 7, 8 ist die den jeweiligen Oberflächenverlauf in einer Querschnittsebene, die senkrecht zur Förderrichtung A verläuft und die Vertikale beinhaltet, jeweils darstellende Linie nicht horizontal und verläuft auch nicht vertikal. Die der Bildung der Förderrinne 3 dienenden Oberflächen 9, 10 der Rinnenbegrenzungswände sind in einem Winkel von 90° zueinander angeordnet. Die Oberflächen 9, 10 der Rinnenbegrenzungswände 7, 8 sind eben ausgebildet. Die Ebenen, in denen die ebenen Oberflächen 9, 10 verlaufen, schneiden sich im Bereich des Grunds der Förderrinne 3.

Im Grund der Förderrinne 3 ist ein Schlitz 11 vorgesehen, durch den ein Schubklotz in Form eines Stifts 12 hindurchgreift. Wie in Fig. 3 ersichtlich, ist unterhalb der Förderrinne 3 eine umlaufende Kette angeordnet. An dieser ist der Stift 12 befestigt und läuft mit ihr um, so dass er nach einem Umlauf in der Position 13 in den Schlitz 11 eintritt.

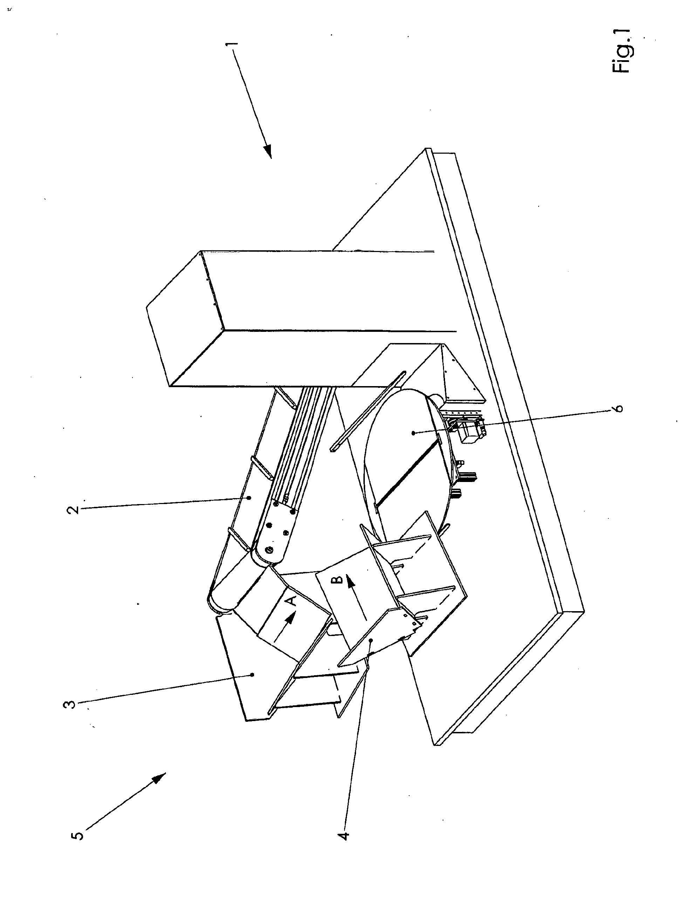

Wie aus Fig. 1 und 2 ersichtlich, weist die erfindungsgemäße Fördervorrichtung 5 zwei erfindungsgemäße Förderrinnen 3, 4 auf. Die Förderrichtung A der Förderrinne 3 steht im Winkel von 90° zur Förderrichtung B der Förderrinne 4. Dadurch wird erreicht, dass übereinandergestapelte Stückgüter, die mittels des Stifts 12 entlang der Förderrichtung A der Förderrinne 3 bewegt werden und in die Förderrinne 4 fallen, bezüglich der Förderrichtung B nebeneinanderliegend angeordnet sind.

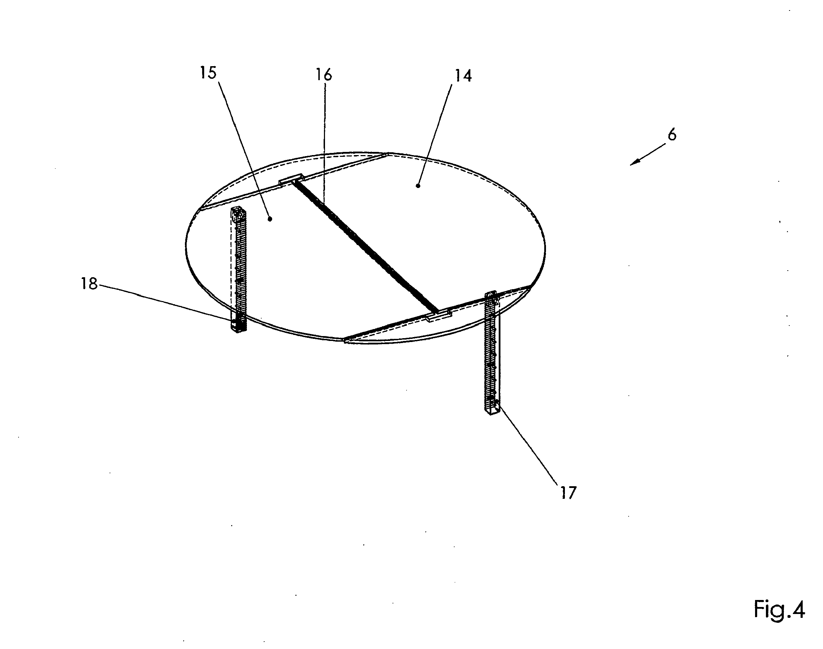

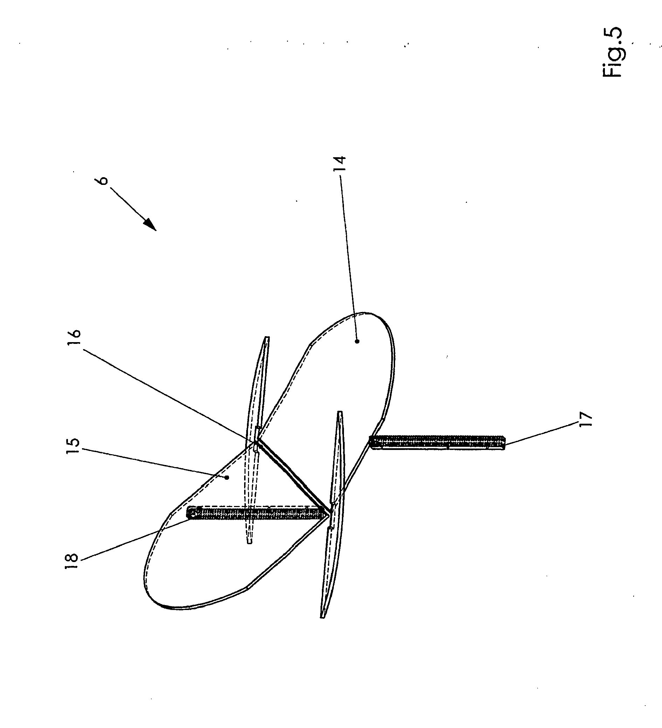

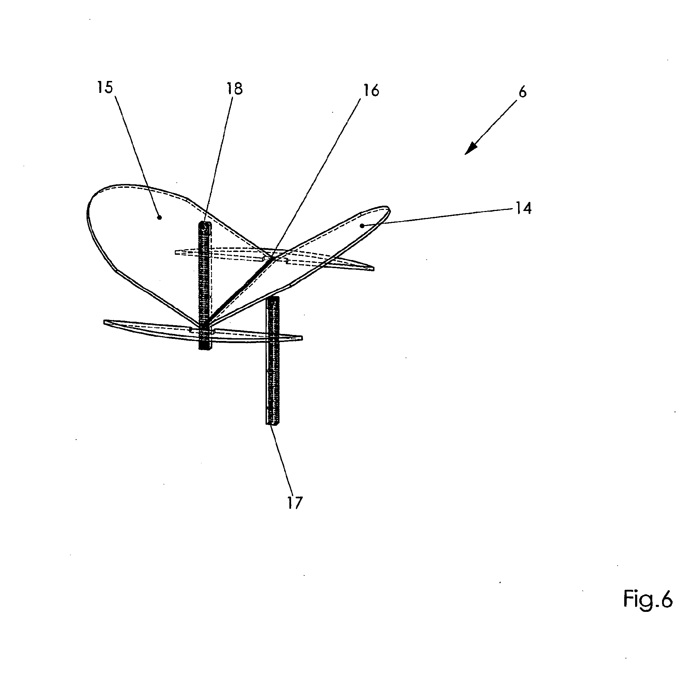

Wie aus den Fig. 4, 5 und 6 ersichtlich, weist der erfindungsgemäße Drehteller 6 Tellerelemente 14, 15 auf. Die Tellerelemente 14, 15 bilden einen Teil der zur Aufnahme von Stückgut vorgesehenen Oberfläche des Drehtellers 6. Die Tellerelemente 14 und 15 sind über eine Schwenkachse 16 verbunden, so dass diese relativ zueinander verschwenken können und beispielsweise die in den Fig. 5 und 6 gezeigten weiteren Betriebspositionen einnehmen können. Der Drehteller 6 weist einen Rotationsantrieb auf, mit dem die Tellerelemente um eine vertikale Rotationsachse, die durch den Flächenmittelpunkt verläuft, gedreht werden können.

Der Drehteller 6 weist zwei Hubelemente 17, 18 auf, mit denen das jeweilige Tellerelement 14, 15 angehoben werden kann.

Wie sich aus dem Vergleich der Fig. 4, 5 und 6 ergibt, kann durch Heben oder Absenken der Hubelemente 17, 18 eine Vielzahl von möglichen Relativpositionen der Tellerelemente 14, 15 zueinander eingestellt werden.

Die Figuren zeigen, dass die erfindungsgemäße Förderrinne 3, 4 und die erfindungsgemäße Fördervorrichtung 5 den Vorteil bieten, dass die Artikel nicht irgendwo auf einer Fläche liegen, sondern in der Förderrinne 3, 4 in jedem Fall mit einer Kante parallel zur Rinnenkehle ausgerichtet bzw. mindestens eine Packung mit ihrer Kante in der Kehle der Förderrinne 3, 4 liegt. In der Kehle (im Grund der Förderrinne 3) verfährt ein Stift 12, der die Packung entlang der Förderrinne 3 transportiert. Am Ende überwacht ein (nicht näher dargestellter) Sensor, dass der Stift 12 nur solange nach vorn schiebt, bis die Packung aus der Förderrinne 3 kippt. Liegen versehentlich mehrere Packungen hintereinander in der Förderrinne 3, so werden sie dadurch endgültig vereinzelt, beispielsweise dadurch, dass der Stift 12 angehalten wird, wenn die erste Packung aus der Förderinne 3 kippt und erst nach Ablauf einer vorgegebenen Zeit weiterfährt. Liegen sie nebeneinander/übereinander, so kann eine spezielle Reibung der Oberflächen 9, 10 der Förderrinne dazu führen, dass nur der vom Stift 12 angetriebene Artikel bewegt wird. Die Haftreibung an der Rinnenwand 7, 8 kann mit einfachen Versuchen so gewählt werden, dass sie größer ist als die Reibung von Artikel auf Artikel, jedoch so gering ist, dass Artikel, die in die Förderrinne 3 fallen, bis zur Kehle der Förderrinne 3 rutschen. Neben der Verwendung einer geeigneten Reibung kann auch der Stift 12 eine bestimmte Beschleunigung fahren, wodurch die Packung, die sich nicht im Kraftschluss des Stifts 12 befindet, durch die Trägheitskräfte zurückgehalten wird.

Die Vereinzelung wird zudem verbessert, wenn der Förderrinne 3 eine um 90° dazu verlaufende zweite Förderrinne 4 vorgesehen ist. Sollten nämlich trotz allem zwei Packungen aufeinanderliegen und gemeinsam vom Stift 12 bewegt werden, so würden sie nebeneinander in die nächste Rinne 4 fallen und liegen dort wegen der 90°-Ausrichtung jetzt hintereinander und können jetzt von dieser Förderrinne 4 leicht vereinzelt werden.

Der erfindungsgemäße Drehteller 6 besteht aus zwei Halbkreisflächen (Tellerelemente 14, 15), die an der Kreismittellinie gelenkig verbunden sind und durch Stellzylinder an der Kreisaußenseite gehoben und gesenkt werden können.

Somit lässt sich sowohl eine horizontale Kreisscheibe herstellen (Fig. 4), als auch eine V-förmig drehbare Rinne (Fig. 6) , als auch eine schräge Fläche (Fig. 5), die je nachdem wie die Kreisscheibe gedreht wurde, zu einer beliebig zu bestimmenden Seite hin einen darauf befindlichen Gegenstand abrutschen lassen kann.

Für den Zweck der Vermessung und Identifikation des Artikels wird die Scheibe (Tellerelemente 14, 15) zunächst in eine Rinnenform (Fig. 6) gebracht. Der vereinzelte Artikel fällt in die Rinne und richtet sich mit einer Kante längs der Rinne aus. Ein Barcode an der Unterseite des Artikels kann durch eine erste (nicht dargestellte) Kamera gelesen werden, insbesondere, wenn einer der Tellerelemente aus Plexiglas gefertigt ist und die Kamera von schräg unten auf den Drehteller gerichtet ist. Die schräge Anordnung der Kamera erlaubt es, die Kamera außerhalb der für den Rotationsantrieb des Drehtellers notwendigen Mechaniken anzuordnen.

Wird der Teller nun waagerecht gestellt, lassen sich mit einfacher Abstandssensorik durch Drehen Länge und Breite des Artikels bestimmen. Ebenso können mit diesen oder einer weiteren (ebenfalls nicht dargestellt) Kamera alle vier Außenseiten der Packung nach einem Barcode abgesucht werden. Eine (die) weitere Kamera über dem Artikel kann die Artikeloberseite ebenfalls auf Barcode untersuchen und durch die von einem (nicht dargestellten) Abstandssensoren bekannten Längen und Höhen in der Draufsicht die Höhe ermitteln.

Nach der Ermittlung von Länge, Breite, Höhe, Identnummer und Verfallsdatum kann die Packung so gedreht werden, wie sie vom Regalbediengerät aufgenommen werden soll. Ist sie quer statt lang, so wird der Teller um 90° gedreht. Ist die Packung hochkant statt flach, wird die Rinne noch einmal in V-Form gebracht. Der Artikel fällt auf eine Fläche; nach Absenken der Fläche liegt der Artikel dann wieder quer oder längs und kann wie oben beschrieben in Position gebracht werden.

Sollte der Artikel nicht einlagerbar sein, beispielsweise, wenn eine Lage nicht hergestellt werden kann oder der Barcode nicht lesbar ist, so kann der Drehteller eine Schräge bilden und der Artikel rutscht in eine Error-Ausgabe oder in einen Lift, der ihn dem Schüttgut für einen neuen Versuch zuführt.

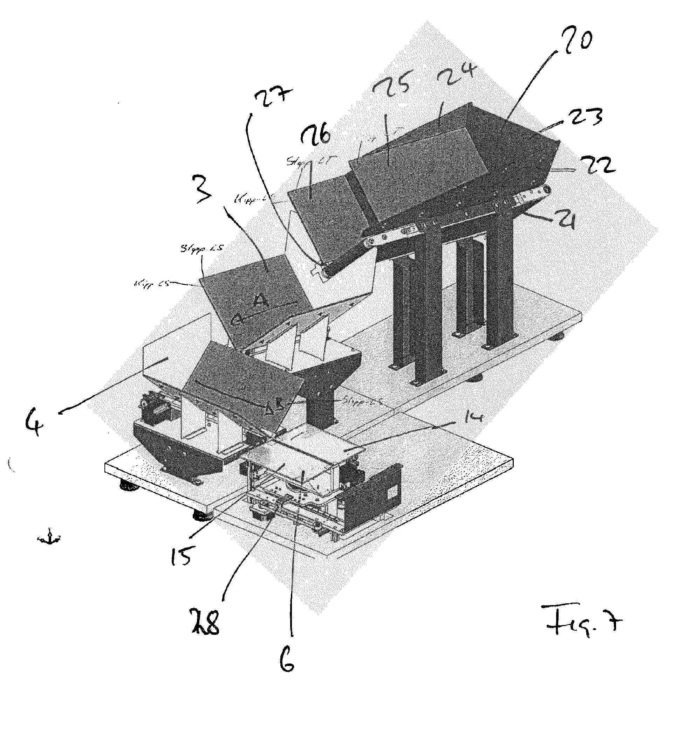

Fig. 7 zeigt unter Beibehaltung gleicher Bezugszeichen für gleiche Bauteile, dass anstelle des in Fig. 1 und 2 dargestellten Förderbandes 2 eine weitere erfindungsgemäße Förderrinne 20 vorgesehen sein kann. Bei dieser Förderrinne 20 wird bei einer der Rinnenbegrenzungswände die eine Oberfläche der Rinnenbegrenzungswand durch die Oberfläche eines Förderbands 21 gebildet. Des Weiteren weist die Förderrinne 21 Trogbleche 22, 23, 24 auf, die das Einschütten von Stückgütern in die Förderrinne 21 vereinfachen. Fig. 7 zeigt, dass die dem Förderband gegenüberliegenden Oberflächen durch zwei gestufte Rinnenbegrenzungswände 25 und 26 gebildet werden. Dadurch wird die Förderinne 21 im Kern in zwei Unter-Förderinnen untergliedert. So weist die Förderinne 21 auch zwei unabhängig voneinander, jeweils im Grund der jeweiligen Unter-Förderrinne angeordnete Bänder auf (Band 27 der in Förderrichtung zweiten Unter-Förderinne ist in Fig. 7 dargestellt), an denen jeweils ein (nicht näher dargestellter) Schubklotz befestigt ist, der durch einen Schlitz im Grund der jeweiligen Unter-Förderrinne in das Innere der jeweiligen Unter-Förderrinne ragt, um dort in Eingriff mit Stückgut zu gelangen, das sich in der jeweiligen Unter-Förderrinne befindet.

Ferner zeigt Fig. 7, dass die Tellerelemente 14, 15 des Drehtellers 6 auch rechteckig ausgeführt werden können.

Ebenso zeigt Fig. 7 einen Schlitten 28, mit dem die Tellerelemente 14, 15 verschoben werden können. Dadurch können die Tellerelemente 14, 15 nach Aufnahme eines Stückguts von der vorgelagerten Förderrinne 4 fortbewegt werden, um mehr Raum für ein Verschwenken eines oder der Tellerelemente 14, 15 zu schaffen.

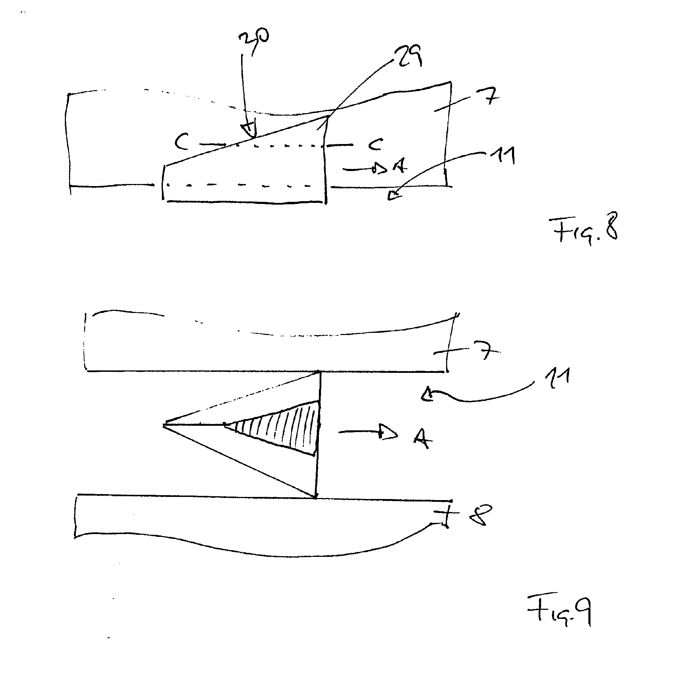

Fig. 8 zeigt eine Seitenansicht eines in einer Förderrinne verwendbaren Schubklotzes 29. Im Hintergrund der Fig. 8 ist eine Rinnenbegrezungswand 7 zu sehen, an deren Grund ein Schlitz 11 vorgesehen ist, in dem der Schubklotz 29 in Förderrichtung A beweglich angeordnet ist. Fig. 9 zeigt eine Schnittansicht des Schubklotzes 29 gemäß Fig. 8 entlang der Linie C-C in Fig. 8. Der Schubklotz 29 hat eine längliche Form und erstreckt sich mit seiner Längserstreckung in Förderrichtung A und mit seiner Höhe in eine Richtung senkrecht zur Förderrichtung A. Der Schubklotz 29 weist in einer Ebene, die senkrecht zur Höhe steht, eine dreieckige Querschnittsform auf (vgl. Fig. 9). Die Querschnittsform (dreieckig) des Schubklotzes 29 ist über einen Teil seiner Höhe gleich, während sich die Größe des Querschnitts unter Beibehaltung der Querschnittsform ändert, der Schubklotz also zu seinem freien Ende hin zulaufend ausgeführt ist (vgl. Fig. 9). Die eine Basis des Dreiecks weist nach vorne, in Förderrichtung. Die Spitze weist nach hinten, entgegen der Förderrichtung. Der Schubklotz 29 weist zudem in eine Schräge 30 auf, die sich von einem höheren, in Förderrichtung vorderen Niveau nach hinten, entgegen der Förderrichtung in Richtung auf den Grund der Förderrinne hin absenkt.

## Patentansprüche

1. Förderrinne (3, 4, 20) für einen Kommissionierautomaten (1) für Apotheken, die sich in eine Förderrichtung (A, B) erstreckt, **gekennzeichnet durch** zwei Rinnenbegrenzungswände (7, 8, 25, 26), deren Oberflächen (9, 10) nicht parallel zueinander verlaufen, wobei die den Oberflächenverlauf zumindest einer Rinnenbegrenzungswand (7, 8, 25, 26) in einer Querschnittsebene, die senkrecht zur Förderrichtung (A, B) verläuft und die Vertikale beinhaltet, darstellende Linie nicht horizontal und nicht vertikal verläuft.

2. Förderrinne nach Anspruch 1, **dadurch gekennzeichnet, dass** bei beiden Rinnenbegrenzungswände (7, 8, 25, 26) die den jeweiligen Oberflächenverlauf in einer Querschnittsebene, die senkrecht zur Förderrichtung (A, B) verläuft und die Vertikale beinhaltet, jeweils darstellende Linie nicht horizontal und nicht vertikal verläuft.

3. Förderrinne nach Anspruch 1 oder 2, **dadurch gekennzeichnet, dass** die beiden Rinnenbegrenzungswände (7, 8, 25, 26) ebene Oberflächen (9, 10) aufweisen und die Ebenen, in denen die ebenen Oberflächen (9, 10) der beiden Rinnenbegrenzungswände (7, 8, 25, 26) angeordnet sind, sich im Bereich des Grunds der Förderrinne (3, 4, 20) schneiden.

4. Förderrinne nach einem der Ansprüche 1 bis 3, **gekennzeichnet durch** einen zumindest teilweise entlang der Förderrichtung verfahrbaren Schubklotz (29) oder Greifer.

5. Förderrinne nach Anspruch 4, **dadurch gekennzeichnet, dass** im Grund der Förderrinne (3, 4) ein sich in Förderrichtung (A, B) erstreckender Schlitz (11) vorgesehen ist, durch den der Schubklotz (29) oder Greifer in das Rinneninnere hineinragt.

6. Fördervorrichtung für einen Kommissionierautomaten (1) für Apotheken, **gekennzeichnet durch** zwei Förderrinnen (3, 4) nach einem der Ansprüche 1 bis 5, wobei die Förderrichtungen (A, B) der Förderrinnen (3, 4, 20) unterschiedlich ausgerichtet sind und die zweite Förderrinne (4) an das Ende der ersten Förderrinne (3) angrenzend angeordnet ist, so dass aus dem Ende der ersten Förderrinne (3) herausgefördertes Stückgut in die zweite Förderrinne (4) fällt.

7. Drehteller für einen Kommissionierautomaten für Apotheken, **gekennzeichnet durch** einen um eine Rotationsachse drehbar antreibaren Teller, dessen zur Aufnahme von Stückgut vorgesehene Oberfläche **durch** die Oberfläche von mindestens zwei Tellerelemente (14, 15) gebildet wird, wobei das eine (14) Tellerelement relativ zum anderen Tellerelement (15) um eine Schwenkachse (16) schwenken kann, die nicht parallel zur Rotationsachse verläuft und nicht der Rotationsachse entspricht.

8. Drehteller nach Anspruch 7, **gekennzeichnet durch** ein Hubelement (17, 18), das ein Tellerelement (14, 15) anheben kann.

9. Drehteller nach Anspruch 8, **dadurch gekennzeichnet, dass** jedes Tellerelement (14, 15) ein Hubelement (17, 18) aufweist, das das jeweilige Tellerelement (14, 15) anheben kann.

10. Drehteller nach einem der Ansprüche 7 bis 9, **dadurch gekennzeichnet, dass** die Tellerelemente (14, 15) gelenkig miteinander verbunden sind.

11. Drehteller nach Anspruch 10, **gekennzeichnet durch** einen Begrenzer, der ein Schwenken der Tellerelemente (14, 15) relativ zueinander in eine Schwenkrichtung begrenzt.

12. Kommissionierautomat für Apotheken, **gekennzeichnet durch** eine Förderrinne (3, 4, 20) nach einem der Ansprüche 1 bis 5 und/oder einer Fördervorrichtung (5) nach Anspruch 6 und/oder einem Drehteller (6) nach einem der Ansprüche 7 bis 11.

13. Kommissionierautomat nach Anspruch 12, **gekennzeichnet durch** einen Lift, mit dem der Drehteller (6) innerhalb des Kommissionierautomaten von einer Aufnahmeposition in eine Abgabeposition bewegt werden kann.

14. Kommissionierautomat nach einem der Ansprüche 12 oder 13, **gekennzeichnet durch** mindestens eine Kamera, die ein auf dem Drehteller (6) angeordnetes Stückgut erfassen kann.

15. Kommissionierautomat nach einem der Ansprüche 12 bis 14, **dadurch gekennzeichnet, dass** ein quaderförmiges Stückgut mit einer ersten Begrenzungswand an einer Rinnenbegrenzungswand (7) und mit einer weiteren Begrenzungswand an der weiteren Rinnenbegrenzungswand (8) anliegt, insbesondere mit beiden Begrenzungswänden flächig an der jeweiligen Rinnenbegrenzungswand (7, 8) anliegt.

16. Verfahren zum Betreiben einer Förderrinne nach Anspruch 4 oder 5, **dadurch gekennzeichnet, dass** der Schubklotz (29) oder der Greifer in Förderrichtung verfahren wird und dabei ein Stückgut oder eine Gruppe von Stückgütern entlang der Förderrichtung bewegt, dass der Schubklotz (29) oder der Greifer angehalten wird, wenn ein Sensor erkennt, dass ein Stückgut sich über das Ende der Förderrinne hinaus bewegt und die Förderrinne verlässt.
